## Europäisches Patentamt
## European Patent Office
## Office européen des brevets

(11) Veröffentlichungsnummer: **0 004 265**
B1

(12) **EUROPÄISCHE PATENTSCHRIFT**

(45) Veröffentlichungstag der Patentschrift: 15.07.81

(21) Anmeldenummer: 78101693.6

(22) Anmeldetag: 15.12.78

(51) Int. Cl.³: **G 01 B 11/00,**
**G 01 B 11/10,**
**G 01 B 11/27, B 65 G 47/22**

(54) Messverfahren zum Bestimmen der Mittenabweichung eines auf einen Förderer aufgesetzten Blechbundes od. dgl.

(30) Priorität: 20.03.78 AT 1938/78

(43) Veröffentlichungstag der Anmeldung:
03.10.79 Patentblatt 79/20

(45) Bekanntmachung des Hinweises auf die Patenterteilung:
15.07.81 Patentblatt 81/28

(84) Benannte Vertragsstaaten:
DE FR GB

(56) Entgegenhaltungen:
US - A - 3 501 642
US - A - 3 555 288
US - A - 3 997 270

(73) Patentinhaber: VOEST-ALPINE Aktiengesellschaft
Werksgelände
A-4010 Linz (AT)

(72) Erfinder: Weinzinger, Hans-Jörg
Eisenwerkstrasse 2
A-4020 Linz (AT)

(74) Vertreter: Hübscher, Gerhard, Dipl.-Ing. et al,
Patentanwälte Dipl.-Ing. Gerhard Hübscher Dipl.-Ing. Helmut Hübscher Dipl.-Ing. Heiner Hübscher
Spittelwiese 7
A-4020 Linz (AT)

Courier Press, Leamington Spa, England.

## Meßverfahren zum Bestimmen der Mittenabweichung eines auf einen Förderer aufgesetzten Blechbundes od.dgl.

Die Erfindung betrifft ein Meßverfahren zum Bestimmen der Mittenabweichung eines stirnseitig auf einen Förderer aufgesetzten Blechbundes od.dgl. von der Förderachse, wobei der Blechbund od.dgl. geradlinig durch ein in der Normalprojektion auf die Förderebene sich schneidendes Lichtschrankenpaar geführt wird.

Beim Transport von Blechbunden muß darauf geachtet werden, daß die Blechbunde od.dgl. angenähert mittig auf den Förderer aufgesetzt sind, da ein Umkippen der relativ schwerden Bunde nicht nur Störungen des Förderers und Beschädigungen der Bunde mit sich bringen, sondern vor allem auch eine Gefahr für das Personal ergeben würde.

Versuche, die Bundlage auf dem Förderer mittels Schwenkarmen abzutasten und ein ungleiches Auslenken der Schwenkarme beispielsweise über Potentiometer zur Bestimmung der Bundmitteabweichung heranzuziehen, waren nicht erfolgreich, da sich auf Grund der Notwendigkeit, die Schwenkarme jeweils gedämpft wieder in die Ausgangslage zurückführen zu müssen, eine technisch viel zu aufwendige und störanfällige Vorrichtung ergab. Um die Schwenkarme kleinzuhalten, sind außerdem die Schwenkarmlagerungen möglichst nahe dem Förderweg der Bunde angeordnet, so daß lose abstehende Windungen diese Lager leicht beschädigen können, und vor allem sind Fehlmessungen durch abstehende Windungen bzw. Bandenden nicht zu vermeiden.

Es gibt auch schon Meßverfahren zum Bestimmen der Mittenabweichung eines Bandes mittels eines Lichtschrankenpaares, doch wird hier ein Lichtschrankenpaar verwendet, das in einer Normalprojektion auf die Förderebene zueinander parallel verläuft und sich in einer Projektion in Förderrichtung schneidet (US-A-3 501 642). Dieses Verfahren ist nur bei kontinuierlichen Bändern, wie Papierbahnen, anwendbar, wobei das Band die Lichtschranken abdeckt, solange es innerhalb eines Sollbereiches liegt, und sie freigibt, sobald der Sollbereich verlassen wird. Dadurch ist die Anzeige einer unerwünschten Lageveränderung des Bandes möglich, die Größe dieser Lageveränderung aber kann nicht bestimmt werden.

Vorgeschlagen wurde auch bereits ein Meßverfahren zur Durchmesserbestimmung von Gegenständen, die auf einem Förderer durch eine Lichtschranke bewegt werden, wobei die Zeitintervalle der Lichtschrankenunterbrechung für die Berechnung des Durchmessers herangezogen werden (US-A-3 997 270). Hier ist es möglich, gleichzeitig zwei Durchmesser und daraus einen Mittelwert zu bestimmen, wenn zwei Lichtschranken verwendet werden, die sich in einer Normalprojektion auf die Förderebene unter einem Winkel von 90° schneiden, doch ist ein Einsatz dieses Verfahrens zur Bestimmung von Mittenabweichungen undurchführbar.

Bekannt ist auch schon ein Verfahren zum Bestimmen der Form und Lage eines mit einem Förderer transportierten Gegenstandes, bei dem ein oder mehrere Lichtvorhänge durch sich bewegende Lichtschranken vorhanden sein müssen (US-A-3 555 288). Durch mehrmaliges Abdecken und Freigeben dieser Lichtschranken kann dann der Gegenstand entsprechend geortet werden, wozu allerdings ein großer Aufwand erforderlich ist. Außerdem eignet sich dieses Verfahren hauptsächlich für längliche, liegende Gegenstände, nicht aber für stehende, runde Blechbunde, bei denen noch dazu abstehende Windungen zu berücksichtigen sind.

Der Erfindung liegt daher die Aufgabe zugrunde, ein Meßverfahren anzugeben, nach dem auf einfache und sichere Weise die Lage eines Bundes auf dem Förderer bestimmt werden kann.

Ausgehend von einem Meßverfahren der eingangs geschilderten At löst die Erfindung diese Aufgabe dadurch, daß die Förderweglänge des Bundes vom Abdecken bzw. Freigeben der einen Lichtschranke bis zum Abdecken bzw. Freigeben der anderen Lichtschranke gemessen und diese Weglänge zur Bestimmung der Mittenabweichung ausgewertet wird. Durch die geometrischen Beziehungen zwischen den bekannten Größen der Lage des Lichtschrankenpaares, des Bunddurchmessers und der gemessenen Größe des Förderweges, entlang dem der Bund eine oder beide Lichtschranken unterbricht, läßt sich ohne jede Schwierigkeit die Mittenabweichung des Bundes von der Förderachse bestimmen, wobei die entsprechende Weglänge des Bundes auf jede mögliche Art gemessen werden kann, beispielsweise ist sie mittels Initiator von der Motorwelle des Förderantriebsmotors abzugreifen und unter Berücksichtigung der Getriebeübersetzung zu errechnen. Die fest installierbaren Lichtschranken erfordern keinen besonderen Aufwand und erlauben ein tatsächliches Bestimmen der Mittenabweichung ohne Beschädigungsgefahr für die vorhandenen Einrichtungen.

In einer besonders vorteilhaften Weiterentwicklung des erfinderischen Verfahrens wird die Weglänge vom Abdecken der einen bis zum Abdecken der anderen Lichtschranke mit der Weglänge vom Freigeben der einen bis zum Freigeben der anderen Lichtschranke verglichen und der numerisch größere Wert dient zur Bestimmung der Mittenabweichung. Auf Grund dieses Vergleiches können Fehlmessungen durch abstehende Bandenden ausgeschaltet werden, da ein loses Bandende nur einen der beiden Werte beeinflußt, und zwar im Sinne einer geringeren Mittenabweichung, so daß der größere der beiden Werte die Bestimmung der tatsächlich vorhandenen Mittenabweichung erlaubt. Gibt es kein lose abstehendes Bandende, sind selbstverständlich beide Werte gleich groß.

Ein besonderer Vorteil des erfindungsgemäßen Meßverfahrens besteht weiter darin, daß es sich direkt in ein Verfahren zum Bestimmen der Bunddurchmesser abändern läßt, wozu nach einer Ausgestaltung der Erfindung die Weglänge vom Abdecken bis zum Freigeben der einen Lichtschranke mit der Weglänge vom Abdecken bis zum Freigeben der anderen Lichtschranke verglichen und der numerisch kleinere Wert zur Bestimmung des Bunddurchmessers ausgewertet wird. Die bestehenden geometrischen Beziehungen lassen den Bunddurchmesser einfach durch Division der gemessenen Weglänge durch den Sinus des von der jeweiligen Lichtschranke und der Förderachse eingeschlossenen Winkels berechnen, wobei, um auch bei der Durchmesserbestimmung eine Fehlmessung durch abstehende Bandenden ausschalten zu können, wieder ein Wertvergleich erfolgt. Da ein abstehendes Bandende den Wert für den Banddurchmesser nur vergrößern könnte, ist selbstverständlich der kleinere Wert für den Durchmesser maßgebend.

In der Zeichnung wird das erfindungsgemäße Meßverfahren rein schematisch veranschaulicht, und zwar zeigen die

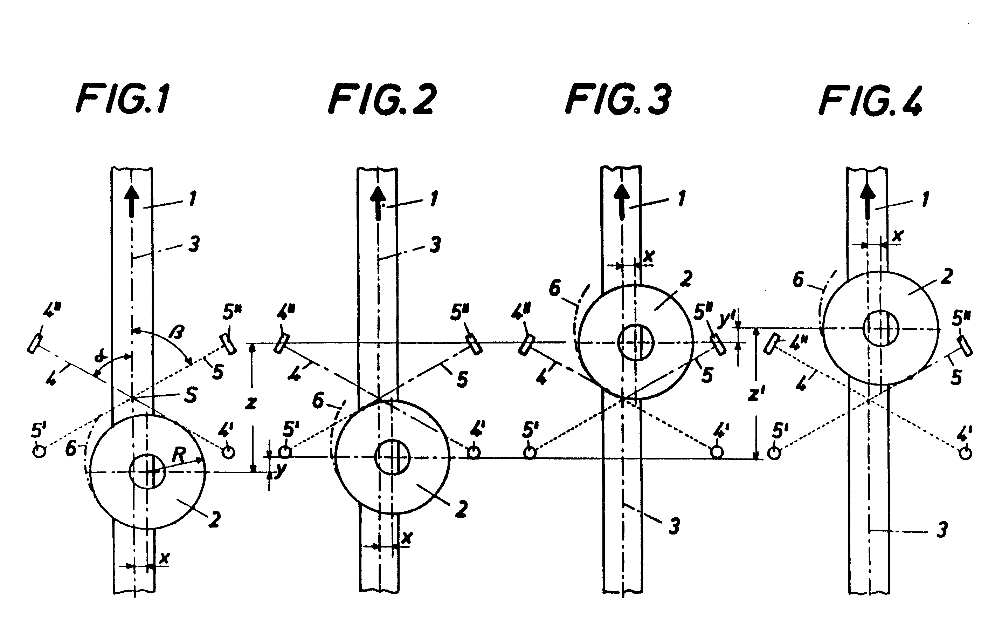

Fig. 1 bis 4 vier Positionen eines das Lichtschrankenpaar durchwandernden Blechbundes in Draufsicht.

Ein Förderer 1 trägt einen aufrecht stehenden Blechbund 2 mit Radius R, dessen Mittenabweichung X von der Förderachse 3 des Förderers bestimmt werden soll. Dazu bilden entsprechende Lichtquellen 4', 5' und ihnen zugeordnete lichtempfindliche Empfänger 4", 5" zwei sich kreuzende Lichtschranken 4, 5, die beim Transport des Bundes 2 von diesem durchquert werden. In der Normalprojektion auf die Fördererebene, die hier mit der Zeichenebene zusammenfällt, liegt der Schnittpunkt S der beiden Lichtschranken 4, 5 auf der Förderachse 3 und die Lichtschranke 4 schließt mit der Förderachse 3 einen Winkel $\alpha$ bzw. die Lichtschranke 5 mit der Förderachse 3 einen Winkel $\beta$ ein. Wird nun ein geschlossener Blechbund 2 durch das Lichtschrankenpaar 4, 5 geführt, deckt er zuerst die Lichtschranke 4 ab (Fig. 1) und dann nach Zurücklegen der Weglänge Y auch die Lichtschranke 5 (Fig. 2). Auf Grund der sich dabei ergebenden geometrischen Verhältnisse läßt sich leicht die Beziehung

$$Y = R \left( \frac{1}{\sin\alpha} - \frac{1}{\sin\beta} \right) + X \left( \mathrm{ctg}\alpha + \mathrm{ctg}\beta \right)$$

ableiten. Da die Winkel $\alpha$ und $\beta$ der Lichtschranken 4, 5 mit der Förderachse 3 und der Radius R des Bundes 2 bekannte, feststehende Größen darstellen, ist die Mittenabweichung X nur mehr von der Förderweglänge Y des Bundes abhängig und kann durch Messen dieser Weglänge Y bestimmt werden. Sind die beiden Winkel $\alpha$ und $\beta$ gleich groß, gilt die Beziehung

$$Y = 2 \, X \, \mathrm{ctg}\alpha \quad \mathrm{bzw.} \quad X = \frac{Y}{2\,\mathrm{ctg}\alpha} \, ,$$

wodurch sich die Mittenabweichung X auch ohne Kenntnis des Bundradius R ergibt.

Verläßt der Bund 2 das Lichtschrankenpaar 4, 5, gibt er zuerst die Lichtschranke 4 frei (Fig. 3) und dann nach Zurücklegen des Förderweges Y' die Lichtschranke 5 (Fig. 4). Auch hier beim Freigeben der Lichtschranken kann auf gleiche Weise wie beim Abdecken der Lichtschranken die Mittenabweichung des Blechbundes 2 von der Förderachse 3 durch Messen der Weglänge Y' zwischen Freigabe der Lichtschranke 4 und Freigabe der Lichtschranke 5 bestimmt werden. Dadurch entsteht die Möglichkeit, Fehlmessungen auf Grund eines abstehenden Bandendes auszuschalten. Wie in der Zeichnung strichpunktiert angedeutet, würde ein abstehendes Bandende 6 die beim Abdecken der Lichtschranken 4, 5 gemessene Förderweglänge Y des Bundes 2 verkürzen und damit eine geringere Mittenabweichung vortäuschen. Beim Freigeben der Lichtschranken 4, 5 beeinflußt das abstehende Bandende 6 die gemessene Förderweglänge Y' jedoch nicht, so daß sich nur durch die Weglänge Y' die richtige Mittenabweichung X ergibt. Wird umgekehrt durch das abstehende Bandende der Wert Y' verfälscht, zeigt die Weglänge Y die genaue Mittenabweichchung X an Da eine Fehlmessung nur in Richtung kleinerer Werte für die Mittenabweichung zustandekommt, erlaubt der Vergleich der Weglängen Y, Y' eine Vermeidung von Fehlmessungen, wenn immer nur der numerisch größere Wert von Y oder Y' zur Bestimmung der Mittenabweichung herangezogen wird.

Durch Messung der Wegstrecke Z des geförderten Bundes 2 vom Abdecken der Lichtschranke 4 bis zum Freigeben dieser Lichtschranke (Fig. 1 und 3) bzw. durch Messung der Wegstrecke Z' des Bundes 2 vom Abdecken der Lichtschranke 5 bis zu deren Freigabe (Fig. 2 und 4) läßt sich auf Grund der Beziehung

$$2R = \frac{Z}{\sin\alpha} \quad \mathrm{bzw.} \quad 2R = \frac{Z'}{\sin\beta}$$

auch unmittelbar der Durchmesser des Bundes 2 bestimmen, wobei eine durch das abstehende Bandende 6 bedingte Fehlmessung dadurch auszuschalten ist, daß immer nur der numerisch kleinere Wert von Z oder Z' zur Bestimmung des Durchmessers ausgewertet wird.

**Patentansprüche:**

1. Meßverfahren zum Bestimmen der Mittenabwichung (X) eines stirnseitig auf einen Förderer (1) aufgesetzten Blechbundes (2) od.dgl. von der Förderachse (3), wobei der Blechbund (2) od.dgl. geradlinig durch ein in der Normalprojektion auf die Förderebene sich schneidendes Lichtschrankenpaar (4, 5) geführt wird, dadurch gekennzeichnet, daß die Förderweglänge (Y, Y') des Bundes (2) vom Abdecken bzw. Freigeben der einen Lichtschranke (4) bis zum Abdecken bzw. Freigeben der anderen Lichtschranke (5) gemessen und diese Weglänge zur Bestimmung der Mittenabweichung (X) ausgewertet wird.

2. Meßverfahren nach Anspruch 1, dadurch gekennzeichnet, daß die Weglänge (Y) vom Abdecken der einen (4) bis zum Abdecken der anderen Lichtschranke (5) mit der Weglänge (Y") vom Freigeben der einen (4) bis zum Freigeben der anderen Lichtschranke (5) verglichen wird und der numerisch größere Wert zur Bestimmung der Mittenabweichung (X) dient.

3. Meßverfahren nach Anspruch 1, dadurch gekennzeichnet, daß die Weglänge (Z) vom Abdecken bis zum Freigeben der einen Lichtschranke (4) mit der Weglänge (Z') vom Abdecken bis zum Freigeben der anderen Lichtschranke (5) verglichen und der numerisch kleinere Wert zur Bestimmung des Bunddurchmessers (2R) ausgewertet wird.

**Revendications**

1. Procédé de mesure pour déterminer le déport (X) du centre d'une couronne de tôle (2) ou similaire, posée de chant sur un transporteur (1), relativement à l'axe de transport (3), la couronne de tôle (2) ou similaire étant guidée en ligne droite à travers une paire de barrières photo-électriques (4, 5) se coupant dans leur projection normale sur le plan de transport, caractérisé par le fait que l'on mesure la longueur (Y, Y') du parcours de transport de la couronne (2) depuis l'occultation ou la libération de l'une des barrières photo-électriques (4) jusqu' à l'occultation ou à la libération de l'autre barrière photo-électrique (5) et que l'on interprète cette longueur de parcours pour déterminer le déport (X) du centre.

2. Procédé de mesure selon la revendication 1, caractérisé par le fait que l'on compare la longueur de parcours (Y) depuis l'occultation de l'une (4) des barrières photo-électriques jusqu'à l'occultation de l'autre barrière photo-électrique (5) à la longueur de parcours depuis la libération de l'une (4) des barrières photo-électriques jusqu'à la libération de l'autre barrière photo-électrique (5) et que la valeur la plus grande numériquement sert à déterminer le déport (X) du centre.

3. Procédé de mesure selon la revendication 1, caractérisé par le fait que l'on compare la longueur de parcours (Z) depuis l'occultation jusqu'à libération de l'une (4) des barrières photo-électriques à la longueur de parcours (Z') depuis l'occultation jusqu'à la libération de l'autre barrière photo-électrique (5) et que l'on interprète la valeur la plus petite numériquement pour déterminer le diamètre (2R) de la couronne.

**Claims**

1. A measuring method for determining the deviation (X) of the centre of a sheet metal coil (2) or the like, which has been placed with an end face on a conveyor (1), from the axis (3) of the conveyor, wherein the sheet metal coil (2) or the like is guided along a straight line by a pair of photoelectric light barriers (4, 5), which have mutually intersecting normal projections on the conveyor plane, characterized in that the distance (Y, Y') travelled by the coil (2) from the covering or exposure of one photoelectric light barrier to the covering or exposure of the other photoelectric light barrier (5) is measured and is utilized to determine the deviation (X) of the centre.

2. A measuring method according to claim 1, characterized in that the distance (Y) travelled from the covering of one photoelectric light barrier (4) to the covering of the other photoelectric light barrier (5) is compared with the distance (Y") travelled from the exposure of one photoelectric light barrier (4) to the exposure of the other photoelectric light barrier (5) and the numerically larger value is used to determine the deviation (X) of the centre.

3. A measuring method according to claim 1, characterized in that the distance (Z) travelled from the covering to the exposure of one photoelectric light barrier (4) is compared with the distance (Z') travelled from the covering to the exposure of the other photoelectric light barrier (5) and the numerically smaller value is used to determine the coil diameter (2R).

FIG.1  FIG.2  FIG.3  FIG.4